# FASCICULE DE BREVET EUROPEEN

(11) **EP 2 703 703 B1**
(45) Date de publication et mention de la délivrance du brevet: **19.08.2015**
(21) Numéro de dépôt: 12306054.3
(22) Date de dépôt: 04.09.2012
(51) Int. Cl.: F16L 5/02, F16L 5/08

(54) **Dispositif de passage étanche d'une cloison pour tuyauterie**
Dichte Durchführungsvorrichtung durch eine Wand für Rohrleitungen
Device for sealed passage of a partition for piping

(43) Date de publication de la demande: 05.03.2014
(73) Titulaire: GE Energy Products France SNC, 90000 Belfort (FR)
(72) Inventeur: Vasinis, Christophe, 90400 Danjoutin (FR)
(74) Mandataire: Casalonga

(56) Documents cités:
- EP-A1- 2 228 577
- US-A- 5 810 400
- US-A- 5 988 698

## Description

L'invention concerne le passage étanche d'une tuyauterie à travers une cloison, et plus particulièrement le passage étanche d'une tuyauterie permettant de conserver une liberté de mouvement d'un tuyau dans toutes les directions.

Lors de la construction d'une pièce ou d'un bâtiment, il est généralement nécessaire de prévoir des arrivées externes pour le passage de conduits de fluides ou d'électricité dans la pièce ou le bâtiment. Le transport de fluides ou d'électricité peut être réalisé de différentes manières selon les besoins.

Dans le cas d'un transport de liquide, par exemple, il est généralement nécessaire d'utiliser des conduits ou tuyaux rigides qui passent au travers d'une ou de plusieurs cloisons via des orifices de passage pour atteindre la pièce de destination. Le document US 5988698 dévoile un dispositif de passage selon le préambule des revendications 1 et 7. L'installation de cloisons et la réalisation des orifices sont fait parfois après le montage de tuyauteries.

Pour éviter que l'orifice de passage créé dans chaque cloison ne permette le passage d'air depuis l'extérieur ou d'autres types d'intrusions, cet orifice est généralement comblé après l'insertion du tuyau, de manière à boucher l'orifice, et rendre le passage étanche. Selon les besoins, et selon les matériaux employés, l'étanchéité du passage permet également de réaliser une isolation phonique.

Le passage d'un conduit au travers d'une cloison est susceptible de poser un certain nombre de problèmes lorsque le conduit et la cloison sont mis en mouvement, par exemple par dilatation, de manière indépendante l'un par rapport à l'autre en particulier lorsque les mouvements ne son pas en phase. L'étanchéité du passage peut alors être compromise. Le conduit peut être endommagé. Le risque de fuites est alors important.

D'après des mesures réalisées, pour assurer de bonnes conditions de sécurité, il faut en moyenne qu'un tuyau possédant un diamètre de dimension *d* puisse subir dans l'orifice de passage une translation de plus ou moins *0,2***d* dans les trois directions de l'espace, et une rotation de plus ou moins 15° dans les trois sens de rotation de l'espace, sans que l'étanchéité ne soit compromise. Ceci permet de maintenir une étanchéité par exemple en cas de séisme.

Généralement, les conduits traversent les cloisons extérieures d'un bâtiment au travers d'un mur de soubassement en béton. Les passages dans ces murs sont réalisés après l'installation de la tuyauterie, sans étanchéité, et les conduits sont fixés à partir de fixations latérales empêchant tout déplacement latéral. En général, au mieux, seule la translation dans la direction du conduit est autorisée. De plus, les fixations latérales engendrent des charges supplémentaires sur la structure du conduit, et l'ajout de joints d'expansion, entraîne des coûts supplémentaires.

Pour tenter de résoudre en partie ces problèmes, il est connu d'utiliser des panneaux d'isolation phonique à fixer sur la cloison autour de l'orifice de passage. L'orifice de passage est rempli de laine minérale pour réaliser une isolation phonique de l'orifice. La laine minérale est maintenue en place à l'aide de deux demi-plaques de scellement venant se fixer sur les panneaux. Les demi-plaques sont réalisées à partir d'une même plaque dans laquelle est découpé un trou dont le diamètre correspond à celui du conduit traversant le passage. La plaque est ensuite coupée en deux pour créer deux demi-plaques aptes à être fixées de part et d'autre du conduit.

Cependant, une telle solution n'offre qu'un seul degré de liberté. En effet, seule la translation dans la direction du conduit est permise, ce qui peut au passage enlever la laine minérale.

Au vu de ce qui précède, il est proposé de résoudre les problèmes mentionnés ci-dessus, et en particulier de conserver une liberté de déplacement et de rotation d'un conduit traversant une cloison dans toutes les directions de l'espace.

L'invention a donc pour objet un dispositif de passage étanche pour tuyauterie, comprenant un anneau de fixation destiné à être fixé sur un conduit, un support destiné à être fixé sur une cloison autour d'un orifice de passage du conduit, et un joint annulaire déformable d'étanchéité disposé entre l'anneau de fixation et le support.

La forme annulaire du joint permet d'épouser les contours du conduit. L'anneau de fixation destiné à être fixé sur le conduit coopère avec le joint annulaire pour créer une étanchéité autour du conduit. L'étanchéité du passage est finalisée par le maintien du joint sur le support de manière étanche. L'élasticité du joint permet au conduit de bouger par rapport à la cloison dans les trois directions de l'espace, tout en maintenant l'étanchéité du joint en assurant toujours des surfaces de contact entre les joints, et par conséquent du passage.

Le dispositif est décrit dans les revendications, en particulier les revendications 1 et 7.

La réalisation du joint annulaire à partir de deux portions partiellement annulaires, c'est-à-dire formant une portion d'anneau, permet d'appliquer les deux portions et de former un joint annulaire alors que le conduit est déjà en place dans l'orifice de passage et relié au reste du système de tuyauterie. Le recouvrement au moins partiel des deux portions annulaires permet de conserver l'étanchéité du joint, et par conséquent du passage, lorsque le conduit est déplacé ou tourné par rapport à la cloison dans les trois directions de l'espace.

De préférence, les première et seconde portions annulaires se recouvrent sur un angle d'au moins 60° sur deux zones de recouvrement.

Dans un mode de réalisation, l'anneau de fixation comprend un épaulement annulaire sur lequel le joint annulaire est en appui.

L'étanchéité entre le joint annulaire et le conduit est réalisé à l'aide de l'anneau de fixation fixé de manière étanche sur le conduit. On réalise ainsi une jonction étanche entre l'épaulement et le joint annulaire déformable.

Dans ce mode de réalisation, le joint annulaire comprend deux joints annulaires comprenant chacune deux demi-joints semi-circulaires, les deux joints annulaires étant disposés de part et d'autre de l'épaulement annulaire de l'anneau de fixation de sorte que la jonction entre les deux demi-joints semi-circulaires d'un joint annulaire soit orthogonale à la jonction entre les deux demi-joints semi-circulaires de l'autrejoint.

En positionnant deux demi-joints annulaires, de part et d'autre de l'épaulement de l'anneau de fixation, l'étanchéité est assurée même dans le cas de déplacements importants notamment dans la direction du conduit. De plus, en réalisant chacun des demi-joints annulaires en deux portions hémicirculaires, il est possible de monter le joint annulaire alors que le conduit est déjà en place et raccordé au reste du système de tuyauterie.

Pour assurer l'étanchéité du joint, les deux demi-joints sont montés de sorte que la jonction entre les deux portions hémisphériques d'un demi-joint soit orthogonale à la jonction entre les deux portions hémisphériques de l'autre plaque. Les deux demi-joints ne se recouvrant pas, la jonction entre les deux demi-joints peut ne pas être étanche, notamment dans le cas où le conduit est déplacé par rapport à la cloison. En positionnant les deux jonctions orthogonalement l'une par rapport à l'autre, l'étanchéité du passage est ainsi en permanence maintenue, un demi-joint restant étanche même lorsque l'étanchéité de l'autre demi-joint est dégradée. Ceci permet d'assurer toujours une surface de contact.

Avantageusement, le support de fixation, l'anneau de maintien et le joint annulaire peuvent comprendre des moyens complémentaires de centrage.

Les moyens complémentaires de centrage permettent ainsi de positionner les deux demi-joints annulaires de manière à avoir les deux jonctions orthogonales.

Le joint annulaire peut avantageusement être en matériau élastique de type caoutchouc ou métal souple et élastique, notamment à haute température.

Selon un autre aspect, il est proposé une cloison étanche comprenant un orifice destiné à être traversé par un tuyau, comprenant un dispositif de passage étanche de tuyauterie tel que défini ci-dessus fixé sur au moins l'un des côtés de la cloison, autour de l'orifice.

D'autres avantages et caractéristiques de l'invention apparaîtront à l'examen de la description détaillée de modes de réalisation, nullement limitatifs, et des dessins annexés, sur lesquels :
- les figures 1 et 2 illustrent respectivement de manière schématique une vue assemblée et une vue éclatée d'un passage étanche de tuyauterie selon un premier mode de réalisation de l'invention ;
- les figures 3 et 4 représentent schématiquement une vue assemblée et une vue éclatée d'un passage étanche de tuyauterie selon un second mode de réalisation de l'invention.

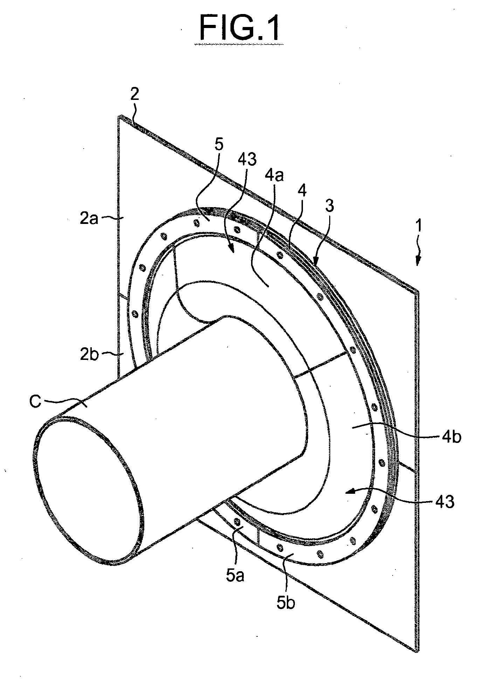

Sur la figure 1 est illustrée de manière une vue en perspective d'un passage étanche de tuyauterie selon un premier mode de réalisation de l'invention.

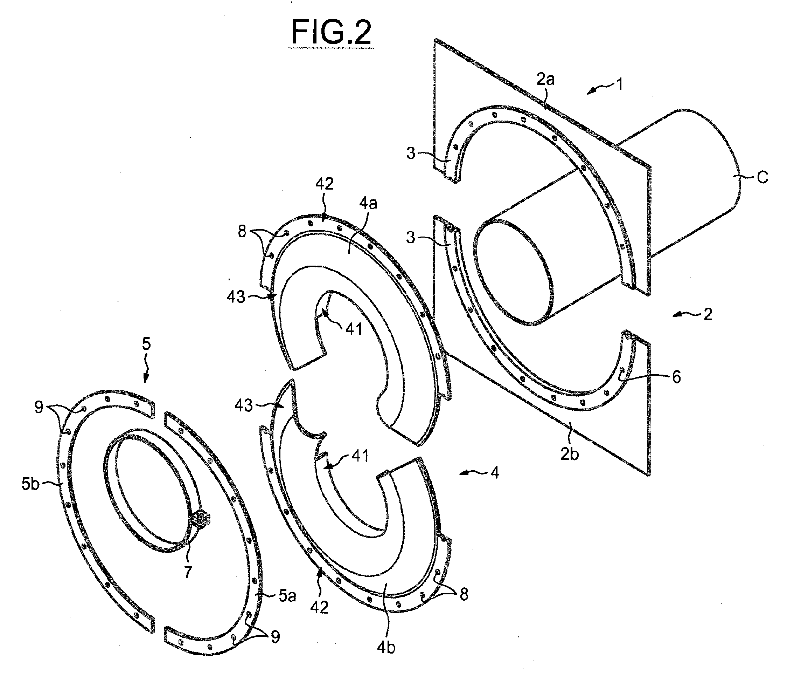

Pour faciliter la compréhension, la figure 2 présente une vue éclatée du passage étanche de tuyauterie de la figure 1.

Comme on le voit, le passage étanche 1 est réalisé au moyen d'un dispositif comprenant un support 2 comportant un trou et destiné être fixé sur une cloison autour d'un orifice de passage pour un conduit C. Le support 2 comprend deux parties 2a et 2b destinées à être juxtaposées de manière à former le support 2 autour du conduit C. Le support 2 comprend, sur le périmètre du trou, une zone de réception 3 d'un joint annulaire 4 et d'un anneau de maintien 5. Le support 2 comporte également des cornières (non représentées) permettant le maintien du support en vue de sa fixation à la cloison. La zone de réception 3 comprend des alésages 6 aptes à recevoir des vis de maintien.

Le joint annulaire 4 est réalisé en matière souple et élastique tel que du caoutchouc ou un métal souple et élastique. Il comprend deux portions 4a et 4b partiellement annulaires, c'est-à-dire en forme d'anneau tronqué. Chaque portion partiellement annulaire 4a et 4b comprend une partie proximale 41 globalement semi-cylindrique destinée à coopérer avec le conduit C, une partie distale 42 destinée à coopérer avec l'anneau de maintien 5 et le support 2, et une partie intermédiaire 43 située entre la portion proximale 41 et la portion distale 42.

La partie proximale 41 et la partie distale 42 de chaque portion partiellement annulaire 4a et 4b forment un demi-cercle, ou la moitié d'un anneau. Ainsi, la partie proximale 41 d'une portion partiellement annulaire 4a peut coopérer de manière jointive avec la partie proximale 41 de la portion partiellement annulaire 4b complémentaire lorsque les deux portions partiellement annulaires 4a et 4b sont assemblées. Tel est également le cas des parties distales 42 des portions partiellement annulaires 4a et 4b. Par conséquent, lorsque les deux portions partiellement annulaires 4a et 4b sont correctement assemblées, les parties proximale 41 et distale 42 se juxtaposent.

Au contraire, les portions intermédiaires 43 de chaque portion partiellement annulaire 4a et 4b définissent chacune plus de la moitié d'un anneau, et plus particulièrement les deux tiers d'un anneau, soit 240 °. Lorsque les portions partiellement annulaires 4a et 4b sont assemblées, leur partie intermédiaire 43 se superpose partiellement sur un secteur d'environ au moins 60° entre le support 2 et l'anneau de fixation 7, sur la surface séparant le tuyau C du bord circulaire du support 2. Le recouvrement entre les deux parties intermédiaires 43 permet ainsi de maintenir l'étanchéité du dispositif de passage étanche 1 même lorsque le conduit C est amené à bouger par rapport au support 2.

L'anneau de maintien 5 comprend également deux parties 5a et 5b semi-circulaires destinées à être juxtaposées de manière à former l'anneau de maintien 5 servant à maintenir le joint annulaire 4, et plus particulièrement les parties distales 42 des portions partiellement annulaires 4a et 4b, contre la zone 3 de réception du support 2.

La juxtaposition, et donc le non recouvrement des parties distales 42 des portions partiellement annulaires 4a et 4b permet à l'anneau de maintien 5 d'assurer un maintien efficace du joint 4 lorsqu'il est serré sur la zone 3 de réception du support 2, tout en assurant une bonne étanchéité, grâce au recouvrement des portions intermédiaires, même lorsque le conduit C est déplacé par rapport au joint.

Pour éviter que des fuites n'apparaissent au niveau des jonctions où les parties 5a et 5b de l'anneau de maintien 5, les portions partiellement annulaires 4a et 4b, et les parties du support 2a et 2b se juxtaposent, la jonction entre les parties 5a et 5b de l'anneau de maintien 5 est positionnée de manière à ne pas être située en regard de la jonction entre les parties distales 42 des portions partiellement annulaires 4a et 4b. Autrement dit, les parties 5a et 5b de l'anneau de maintien 5 sont déplacées angulairement d'un quart de tour, soit 90°, par rapport aux parties distales 42 des portions partiellement annulaires 4a et 4b de manière à améliorer l'étanchéité du dispositif 1.

Les parties distales 42 du joint annulaire 4 comprennent des orifices 8 et l'anneau de maintien 5 comprend des orifices 9. Les orifices 8 et 9 du joint annulaire 4 et de l'anneau de maintien 5 sont destinés à être positionnés en regard des alésages 6 de la zone 3 de réception du support 2 pour réaliser le montage du dispositif de passage étanche 1 à l'aide de vis maintenant le joint annulaire 4 serré entre le support et l'anneau de maintien 5.

Le joint annulaire 4 est fixé sur le conduit C à l'aide d'un anneau de fixation 7 qui peut par exemple être un collier de serrage. L'anneau de fixation 7 vient en appui sur les parties proximales 41 des portions partiellement annulaires 4a et 4b de manière à serrer les parties proximales du joint annulaire 4 contre le conduit C et ainsi assurer l'étanchéité au niveau du conduit C. La juxtaposition, et donc le non recouvrement des parties proximales 41 des portions partiellement annulaires 4a et 4b permet à l'anneau de fixation 7 d'assurer une bonne étanchéité lorsqu'il est serré sur le conduit C.

Une fois assemblé, le dispositif de passage 1 étanche permet, grâce notamment au recouvrement des parties intermédiaires 42 des portions partiellement annulaires 4a et 4b, d'assurer l'étanchéité même lorsque le conduit C se déplace par rapport au support 2.

Pour assurer une meilleure étanchéité, et notamment une meilleure isolation phonique, il est possible d'installer deux passages étanches 1 de chaque côté de la cloison autour de l'orifice de passage par lequel passe un conduit C.

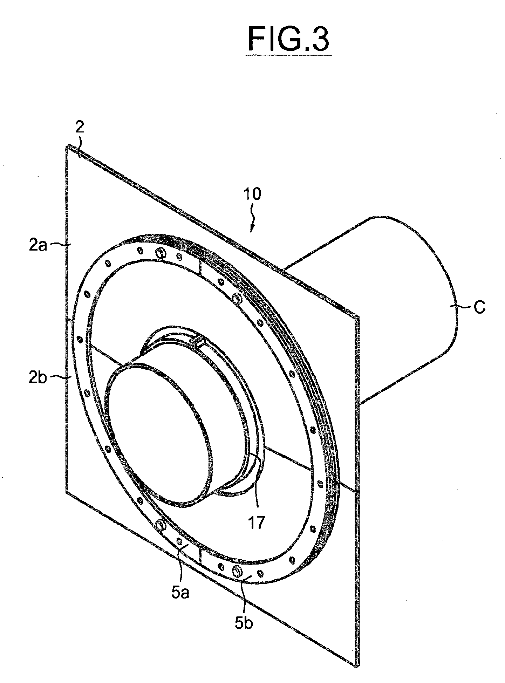

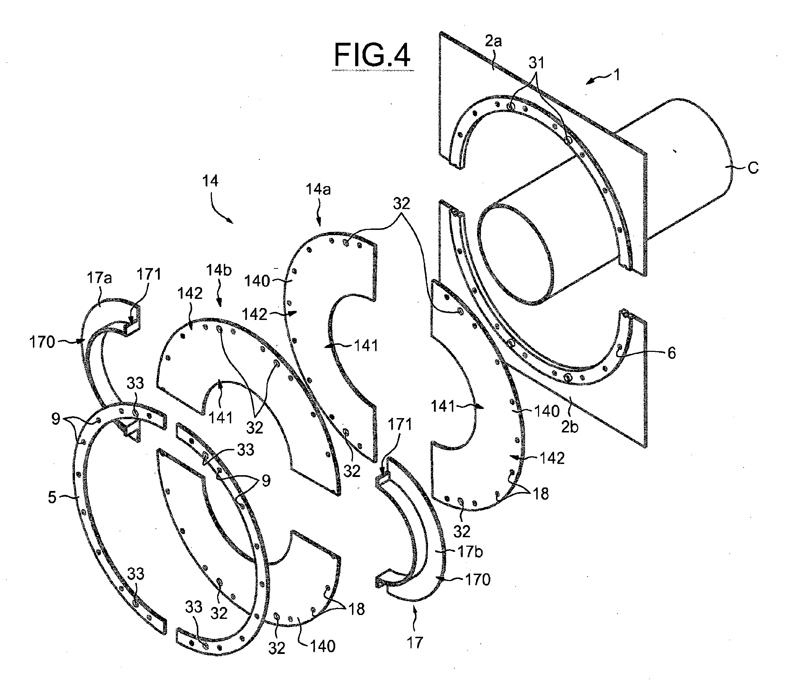

Sur les figures 3 et 4 sont illustrées une vue en perspective et une vue éclatée d'un dispositif de passage étanche 10 pour tuyauterie selon un second mode de réalisation de l'invention.

Les éléments identiques au premier mode de réalisation portent des références identiques.

Dans ce mode de réalisation, l'anneau de fixation 17 est conformé de manière à comprendre un épaulement radial 170. L'anneau de fixation 17 comprend deux parties 17a et 17b destinées à être assemblées directement sur le conduit C de manière à former un anneau comportant un épaulement 170 contre lequel le joint annulaire 14 peut venir en butée pour assurer l'étanchéité du dispositif de passage étanche 1 entre le conduit C et le joint annulaire 14.

Le joint annulaire 14 comprend deux joints plats 14a et 14b montés de part d'autre de l'épaulement 170 de l'anneau de fixation 17. Les deux joints plats 14a et 14b sont réalisés en matériau déformable tel que du caoutchouc ou un métal élastique et souple. Ils assurent l'étanchéité du passage même lorsque le conduit C est déplacé par rapport au support 2.

Chaque partie 17a et 17b de l'anneau de fixation 17 comprend des pattes d'assemblage 171 dont les dimensions sont inférieures à l'épaulement 170. Grâce à leurs dimensions par rapport à celles de l'épaulement, les pattes d'assemblage 171 permettent d'assembler l'anneau de fixation 17 autour du conduit C sans gêner les plaques annulaires 14a et 14b venant en appui sur l'épaulement 170.

Chaque joint annulaire 14a et 14b est réalisé à partir de deux demi-joints semi-circulaires 140 identiques, assemblés par juxtaposition. Chaque demi-joint semi-circulaire 140 comprend une partie proximale 141 et une partie distale 142 par rapport au conduit C. La partie proximale 141 de chaque demi-joint semi-circulaire 140 est en appui contre l'épaulement 170 de l'anneau de fixation 17.

Ainsi, contrairement au mode de réalisation décrit précédemment dans lequel l'étanchéité est obtenu en sollicitant le joint 4 contre le conduit C grâce à l'anneau de fixation, l'étanchéité est ici obtenu grâce à l'appui des joint 14a et 14b contre l'épaulement 170 de l'anneau de fixation.

La partie distale 142 de chaque demi-joint semi-circulaire 140 comprend des orifices 18 pour la fixation du joint annulaire 14 sur le support 2.

Les deux joints annulaires 14a et 14b sont montés de sorte que la jonction entre les demi-joints semi-circulaires 140 d'un joint 14a annulaire soit disposée orthogonalement à la jonction entre les demi-joints semi-circulaires 140 de l'autre joint annulaire 14b, tout en ayant les orifices 8 d'un joint annulaire 14a en regard des orifices 8 du joint annulaire opposé 14b. De cette manière, le risque de fuite est diminué.

De façon similaire, la jonction entre les parties 5a et 5b de l'anneau de maintien 5 est positionnée orthogonalement à la jonction entre les deux demi-joints semi-circulaires 140 du joint annulaire 14b directement en contact avec l'anneau de maintien 5, tout en maintenant les orifices 9 de l'anneau de maintien alignés avec les orifices 18 des joints annulaires 14a et 14b.

En outre, dans ce mode de réalisation, le support 2 comprend également des plots 31 de centrage destinés à coopérer avec des orifices de centrage 32 réalisés sur les parties distales 142 des joints annulaires 14a et 14b, et avec des orifices de centrage 33 réalisés dans l'anneau de maintien 5.

## Revendications

1. Dispositif de passage étanche (1) pour tuyauterie, comprenant un anneau de fixation (7) destiné à être fixé sur un conduit (C), un support (2) destiné à être fixé sur une cloison autour d'un orifice de passage du conduit (C), et un joint annulaire (4) déformable d'étanchéité disposé entre l'anneau de fixation (7) et le support (2), **caractérisé en ce que** l'anneau de fixation (7) est configuré de manière à serrer le joint annulaire (4) sur le conduit (C), et le joint annulaire (4) comprend une première portion partiellement annulaire (4a) assemblée avec une seconde portion partiellement annulaire (4b), la première portion partiellement annulaire (4a) et la seconde portion partiellement annulaire (4b) étant conformées pour se recouvrir au moins partiellement entre l'anneau de fixation (7) et le support (2) et former un joint annulaire étanche (4).

2. Dispositif de passage étanche (1) selon la revendication 1, comprenant un anneau de maintien (5) apte à maintenir le joint annulaire (4) contre le support (2).

3. Dispositif de passage étanche (1) selon l'une des revendications 1 et 2 dans lequel le support (2) comprend un ensemble de cornières de maintien du support sur la cloison.

4. Dispositif de passage étanche (1) selon la revendication 2, dans lequel l'anneau de maintien (5) comprend deux portions semi-circulaires (5a, 5b) s'assemblant pour former un anneau.

5. Dispositif de passage étanche (1) selon l'une des revendications 1 à 4, dans lequel les première et seconde portions partiellement annulaires (4a et 4b) se recouvrent sur un angle d'au moins 60° sur deux zones de recouvrement.

6. Dispositif de passage étanche (1) selon l'une des revendications 1 à 5, dans lequel le joint annulaire (4) est en matériau élastique de type caoutchouc, ou en métal élastique et souple.

7. Dispositif de passage étanche (10) pour tuyauterie, comprenant un anneau de fixation (17) destiné à être fixé sur un conduit (C), un support (2) destiné à être fixé sur une cloison autour d'un orifice de passage du conduit (C), et un joint annulaire (14) déformable d'étanchéité disposé entre l'anneau de fixation (17) et le support (2), **caractérisé en ce que** l'anneau de fixation (17) comprend un épaulement (170) annulaire sur lequel le joint annulaire (14) est en appui, et le joint annulaire (14) comprend deux joints annulaires (141, 142) comprenant chacun deux demi-joints semi-circulaires (140), les deux joints annulaires (141, 124) étant disposés de part et d'autre de l'épaulement (170) annulaire de l'anneau de fixation (17) de sorte que la jonction entre les deux demi-joints semi-circulaires (140) d'un joint annulaire (14a ou 14b) soit orthogonale à la jonction entre les deux demi-joints semi-circulaires (140) de l'autre joint (14b ou 14a).

8. Dispositif de passage étanche (10) selon la revendication 7, dans lequel le support (2), l'anneau de maintien (5) et le joint annulaire (14) comprennent des moyens complémentaires de centrage (31, 32, 33).

9. Dispositif de passage étanche (10) selon l'une des revendications 7 ou 8, comprenant un anneau de maintien (5) apte à maintenir le joint annulaire (14) contre le support (2).

10. Dispositif de passage étanche (10) selon l'une des revendications 7 à 9, dans lequel le support (2) comprend un ensemble de cornières de maintien du support sur la cloison.

11. Dispositif de passage étanche (10) selon la revendication 9, dans lequel l'anneau de maintien (5) comprend deux portions semi-circulaires (5a, 5b) s'assemblant pour former un anneau.

12. Dispositif de passage étanche (10) selon l'une des revendications 7 à 11, dans lequel le joint annulaire (14) est en matériau élastique de type caoutchouc, ou en métal élastique et souple.

13. Cloison étanche comprenant un orifice destiné à être traversé par un conduit (C), **caractérisé en ce qu'**elle comprend au moins un dispositif de passage étanche (1, 10) pour tuyauterie selon l'une quelconque des revendications 1 à 12 fixé sur au moins l'un des côtés de la cloison autour de l'orifice.

## Patentansprüche

1. Dichte Durchführungsvorrichtung (1) für Rohrleitungen, umfassend einen Befestigungsring (7), der dazu bestimmt ist, auf einer Leitung (C) befestigt zu werden, eine Stütze (2), die dazu bestimmt ist, an einer Wand um eine Durchführungsöffnung der Leitung (C) befestigt zu werden, und eine verformbare Ringdichtung (4), die zwischen dem Befestigungsring (7) und der Stütze (2) angeordnet ist, **dadurch gekennzeichnet, dass** der Befestigungsring (7) derart ausgeführt ist, dass er die Ringdichtung (4) auf der Leitung (C) einspannt, und die Ringdichtung (4) einen ersten teilweise ringförmigen Abschnitt (4a), der mit einem zweiten teilweise ringförmigen Abschnitt (4b) zusammengefügt ist, umfasst, wobei der erste teilweise ringförmige Abschnitt (4a) und der zweite teilweise ringförmige Abschnitt (4b) derart ausgeführt sind, dass sie einander zumindest teilweise zwischen dem Befestigungsring (7) und der Stütze (2) überlappen, um eine dichte Ringdichtung (4) zu bilden.

2. Dichte Durchführungsvorrichtung (1) nach Anspruch 1, umfassend einen Haltering (5), der geeignet ist, die Ringdichtung (4) gegen die Stütze (2) zu halten.

3. Dichte Durchführungsvorrichtung (1) nach einem der Ansprüche 1 und 2, bei der die Stütze (2) eine Gesamtheit von Winkeleisen zum Halten der Stütze an der Wand umfasst.

4. Dichte Durchführungsvorrichtung (1) nach Anspruch 2, bei der der Haltering (5) zwei halbkreisförmige Abschnitte (5a, 5b) umfasst, die sich zusammenfügen, um einen Ring zu bilden.

5. Dichte Durchführungsvorrichtung (1) nach einem der Ansprüche 1 bis 4, bei der der erste und der zweite teilweise ringförmige Abschnitt (4a und 4b) einander auf einem Winkel von mindestens 60° auf zwei Überlappungszonen überlappen.

6. Dichte Durchführungsvorrichtung (1) nach einem der Ansprüche 1 bis 5, bei der die Ringdichtung (4) aus einem elastischen Material vom Typ Kautschuk oder aus einem elastischen und biegsamen Metall ist.

7. Dichte Durchführungsvorrichtung (10) für Rohrleitungen, umfassend einen Befestigungsring (17), der dazu bestimmt ist, auf einer Leitung (C) befestigt zu werden, eine Stütze (2), die dazu bestimmt ist, an einer Wand um eine Durchführungsöffnung der Leitung (C) befestigt zu werden, und eine verformbare Ringdichtung (14), die zwischen dem Befestigungsring (17) und der Stütze (2) angeordnet ist, **dadurch gekennzeichnet, dass** der Befestigungsring (17) einen ringförmigen Absatz (170) umfasst, auf dem die Ringdichtung (14) aufliegt, und die Ringdichtung (14) zwei Ringdichtungen (141, 142) umfasst, jeweils umfassend zwei halbkreisförmige halbe Dichtungen (140), wobei die beiden Ringdichtungen (141, 124) beiderseits des ringförmigen Absatzes (170) des Befestigungsringes (17) angeordnet sind, so dass die Verbindung zwischen den beiden halbkreisförmigen halben Dichtungen (140) einer Ringdichtung (14a oder 14b) orthogonal zur Verbindung zwischen den beiden halbkreisförmigen halben Dichtungen (140) der anderen Dichtung (14b oder 14a) ist.

8. Dichte Durchführungsvorrichtung (10) nach Anspruch 7, bei der die Stütze (2), der Haltering (5) und die Ringdichtung (14) komplementäre Zentrierungsmittel (31, 32, 33) umfassen.

9. Dichte Durchführungsvorrichtung (10) nach einem der Ansprüche 7 oder 8, umfassend einen Haltering (5), der geeignet ist, die Ringdichtung (14) gegen die Stütze (2) zu halten.

10. Dichte Durchführungsvorrichtung (10) nach einem der Ansprüche 7 bis 9, bei der die Stütze (2) eine Gesamtheit von Winkeleisen zum Halten der Stütze an der Wand umfasst.

11. Dichte Durchführungsvorrichtung (10) nach Anspruch 9, bei der der Haltering (5) zwei halbkreisförmige Abschnitte (5a, 5b) umfasst, die sich zusammenfügen, um einen Ring zu bilden.

12. Dichte Durchführungsvorrichtung (10) nach einem der Ansprüche 7 bis 11, bei der die Ringdichtung (14) aus einem elastischen Material vom Typ Kautschuk oder aus einem elastischen und biegsamen Metall ist.

13. Dichte Wand, umfassend eine Öffnung, die dazu bestimmt ist, von einer Leitung (C) durchquert zu werden, **dadurch gekennzeichnet, dass** sie mindestens eine dichte Durchführungsvorrichtung (1, 10) für Rohrleitungen nach einem der Ansprüche 1 bis 12 umfasst, die auf mindestens einer der Seiten der Wand um die Öffnung befestigt ist.

## Claims

1. Sealed-passage device (1) for piping, comprising a securing ring (7) intended to be fixed to a conduit (C), a support (2) intended to be fixed to a partition around an orifice through which the conduit (C) passes, and a deformable annular seal (4) positioned between the securing ring (7) and the support (2), **characterized in that** the securing ring (7) is configured to clamp the annular seal (4) on the conduit (C) and the annular seal (4) comprises a partially annular first portion (4a) assembled with a partially annular second portion (4b), the partially annular first portion (4a) and the partially annular second portion (4b) being configured to overlap at least in part between the securing ring (7) and the support (2) and form an annular seal (4).

2. Sealed-passage device (1) according to Claim 1, comprising a retaining ring (5) able to hold the annular seal (4) against the support (2).

3. Sealed-passage device (1) according to one of Claims 1 and 2, in which the support (2) comprises a set of retaining brackets holding the support on the partition.

4. Sealed-passage device (1) according to Claim 2, in which the retaining ring (5) comprises two semicircular portions (5a, 5b) that are assembled to form an annular ring.

5. Sealed-passage device (1) according to one of Claims 1 to 4, in which the first and second partially annular portions (4a and 4b) overlap over an angle of at least 60° in two areas of overlap.

6. Sealed-passage device (1) according to one of Claims 1 to 5, in which the annular seal (4) is made of an elastic material of the rubber type or of a flexible elastic metal.

7. Sealed-passage device (10) for piping, comprising a securing ring (17) intended to be fixed to a conduit (C), a support (2) intended to be fixed to a partition around an orifice through which the conduit (C) passes, and a deformable annular seal (14) placed between the securing ring (17) and the support (2), **characterized in that** the securing ring (17) comprises an annular shoulder (170) against which the annular seal (14) presses, and the annular seal (14) comprises two annular seals (141, 142) each one comprising two semicircular half-seals (140), the two annular seals (141, 124) being positioned one on each side of the annular shoulder (170) of the securing ring (17) so that the joint between the two semicircular half-seals (140) of one annular seal (14a or 14b) is orthogonal to the joint between the two semicircular half-seals (140) of the other seal (14b or 14a).

8. Sealed-passage device (10) according to Claim 7, in which the support (2), the retaining ring (5) and the annular seal (14) comprise complementary centering means (31, 32, 33).

9. Sealed-passage device (10) according to one of Claims 7 and 8, comprising a retaining ring (5) able to hold the annular seal (14) against the support (2).

10. Sealed-passage device (10) according to one of Claims 7 to 9, in which the support (2) comprises a set of retaining brackets holding the support on the partition.

11. Sealed-passage device (10) according to Claim 9, in which the retaining ring (5) comprises two semicircular portions (5a, 5b) assembled to form an annular ring.

12. Sealed-passage device (10) according to one of Claims 7 to 11, in which the annular seal (14) is made of an elastic material of the rubber type or of a flexible elastic metal.

13. Sealed partition comprising an orifice through which a conduit (C) is intended to pass, **characterized in that** it comprises at least one sealed-passage device (1, 10) for piping according to any one of Claims 1 to 12 fixed to at least one of the sides of the partition around the orifice.
